# EUROPEAN PATENT APPLICATION

(11) **EP 4 238 950 A1**
(43) Date of publication of application: **06.09.2023**
(21) Application number: 20958922.5
(22) Date of filing: 27.10.2020
(51) Int. Cl.: C04B 33/04, C04B 40/00, C04B 28/22

(54) **METHOD FOR PRODUCING ACTIVATED/CALCINED CLAY USING CALCIUM ALUMINOFERRITE OR CALCIUM FERRITE AND CLAY COMPOSITION PRODUCED BY SAID METHOD**

(71) Applicant: FCT Holdings Pty Ltd, Thebarton. SA 5031 (AU)
(72) Inventor: LUCAS GERVASIO LADEIRA, Pedro, 30411-105 BELO HORIZONTE (BR); BARROS GRECO, Adriano, Fort Lauderdale (US)
(74) Representative: Fish & Richardson P.C.
(86) International application number: PCT/BR2020/050439
(87) International publication number: WO 2022/087692

(57) **Abstract**

The present patent of invention relates to a method for preparing a composition of activated/calcined clay with a calcium aluminoferrite or calcium ferrite fraction, and to a clay composition prepared by said method, pertaining more precisely to the field of the industrial production of cements, said method disclosing a process for the *in-situ* formation of calcium aluminoferrite or calcium ferrite in order to obtain, from red clay, an activated/calcined clay which is more attractive for addition to a cement composition.

## Description

### TECHNICAL FIELD OF THE INVENTION

The present patent of invention relates to a method of production of activated/calcined clay with calcium aluminoferrite or calcium ferrite and to a clay composition obtained by said method, more precisely pertaining to the field of the production of cementitious materials where said method discloses a process for the in-situ formation of calcium aluminoferrite or calcium ferrite (in the form of Brownmillerite, for example) to obtain from red clay an activated/calcined clay suitable for addition to cement.

### BACKGROUND OF THE INVENTION

Clays with potential cementitious properties, often called artificial pozzolanic clays or clays with pozzolanic activity when activated/calcined in a rotary kiln under normal operating conditions, form a good quality activated/calcined clay. However, depending on their iron oxides content, their red color significantly affects the color of the cement when this material is used as additive.

Thus, the process for manufacturing activated/calcined clay from red clays is known but little used, because of the color of the activated/calcined clay produced.

In this conventional process, the clay is calcined pure, the calcination temperature of the material does not exceed 900°C, generating a red activated/calcined clay that, when added to the clinker, changes the color of the clinker to reddish, causing its use to be rejected by consumers and even the quality of the product to be distrusted. It should be pointed out that the quality of the product is not compromised, but there are certain expectations as to the color of the cement.

### PRIOR ART

Documents relating to the method of production of clay and clay compositions have been found in searches made in specialist databases, such as described in document no. PI 1002450 which relates to a process for manufacturing activated artificial pozzolan obtained from clays, or mixtures of clays, with the addition of combustible materials in the particle size range from 0 to 10 mm, in proportions ranging from 1% to 10% of the mixture. When calcined at temperatures between 600°C and 900°C in a reducing environment, these clays, or mixtures of clays, give rise to "activated artificial pozzolan", which is reactive when in contact with water, imparting agglomerative properties on the material. Contrary to the present invention, the document does not disclose the "in-situ" formation of calcium aluminoferrite or calcium ferrite.

Document no. WO12142547 discloses a cementitious composition including: (a) a binder containing (a) 60-94% by weight of at least one pozzolanic material; (b) at least 0.5% by weight of calcium sulfoaluminate (CSA); (c) 1.2-11% by weight, expressed as SO3, of at least one inorganic sulfate selected from the group of sulfates consisting of calcium sulfate hemihydrate, anhydrous calcium sulfate, calcium sulfate dihydrate, sodium sulfate and sodium calcium sulfate; and (d) a total sulfate content of at least 30, by weight, expressed as SO3, the cementitious composition including a maximum of 3% of natural lime, the cementitious composition including a maximum of 10% of alumina cement, the contents of the composition being calculated on a dry non-aggregated basis.

The above-cited document discloses the inclusion/addition of Andradite in/to the pozzolanic cement, but it does not disclose the "in-situ" formation of calcium aluminoferrite or calcium ferrite (in the form of Brownmillerite, for example) during calcination.

There is therefore a need for activated/calcined clay and methods intended to produce it using easily accessible materials that are underused, such as red clay, resulting in acceptance by the consumer market through promoting a color compatible with cement.

### OBJECTS OF THE INVENTION

The present invention enables red clays, notably those in which the Fe2O3 content exceeds 4% by mass, hitherto an abundant and easily accessible reserve that is underused for the manufacture of activated/calcined clay, to be used. Reserves of clays are widely dispersed and available worldwide, including in the capstones of limestone deposits.

In this respect, the applicant has surprisingly and unexpectedly found that the composition is able to promote such benefits, and in particular to produce an activated/calcined clay of suitable color for use in cements.

One object of the invention is therefore to provide a method for obtaining an activated/calcined clay composition with the "in-situ" production of calcium aluminoferrite or calcium ferrite through the use of red clay by modifying its color during calcination. This has been achieved through the combination of raw material for the manufacture of cement clinker and calcined red clay, and an activated/calcined clay kiln at a temperature above 900°C.

Another object of this invention is to provide a method for obtaining an activated/calcined clay composition with calcium aluminoferrite or calcium ferrite that enables red clay to be used as a result of changing its color upon calcination from reddish to grayish.

A further object of this invention is to provide an activated/calcined clay composition comprising calcium aluminoferrite, preferably a calcium aluminoferrite or calcium ferrite resulting from "in-situ" formation during calcination.

This invention also relates to the provision of a grayish activated/calcined clay composition, originating from red clay as a raw material that can be used in cements, which is free from substantial color deviations.

### DESCRIPTION OF THE FIGURES

To complement the present description so as to obtain a better understanding of the features of the present invention and in accordance with a preferred embodiment thereof, the description is accompanied by an appended set of diagrams which show by way of example but without limitation:
Figures 1 and 2 show diagrams in which all of the products formed in the Ca-Fe-O method can be seen, in which the product Ca₂Fe₂O₅ can be identified as C₂F and the product CaFe₂O₄ can be identified as CF;
Figure 3 presents a graph of the increase in the Ca/Fe ratio with increasing reaction yield; and
Figure 4 shows an image of the X-ray diffraction patterns of calcium ferrites prepared from the mixture of CaO and Fe₂O₃ with a Ca/Fe ratio of between 0.33 and 3 by mass.

### DESCRIPTION OF THE INVENTION

With reference to the figures, the present patent of invention relates to a "METHOD OF PRODUCTION OF ACTIVATED/CALCINED CLAY WITH CALCIUM ALUMINOFERRITE OR CALCIUM FERRITE AND CLAY COMPOSITION OBTAINED BY THE METHOD", more precisely a method for obtaining an activated/calcined clay composition with calcium aluminoferrite or calcium ferrite and the clay composition obtained.

According to the present invention, the method of obtaining the activated/calcined clay composition includes "in-situ" generation of calcium aluminoferrite or calcium ferrite to correct the color of the activated clay. This method constitutes an alternative to the conventional methods of controlling color.

The change in the color of the red clay brought about in the activation/calcination step by the method of "in-situ" generation of calcium aluminoferrite or calcium ferrite is achieved by combining the raw material for manufacturing cement at the basic stage of manufacturing cement clinker, notably limestone and/or clinker powder, similar sources of calcium oxide, and red clay calcined in an activated/calcined clay kiln at a temperature above 900°C.

Said method for obtaining the activated/calcined clay composition comprises the following steps:
(a) The mixture of clay and limestone and/or clinker powder is fed into the kiln in counter-flow to the flue gases produced by burning fuel, drawn inside the kiln via an exhaust fan. The activated/calcined clay is obtained at a temperature above 900°C, with the mixture having a residence time within the kiln of approximately 45-90 minutes;
(b) Gauging the mass of typical raw material to manufacture cement clinker at the basic stage for addition with the intent of providing the CaO needed so as to maintain the stoichiometric ratio of reaction (1), considering, for exemplary calculations, a typical raw material for the manufacture of cement clinker of typical composition, namely:

| SiO₂ (%) | Al₂O₃ (%) | Fe₂O₃ (%) | CaO (%) | MgO (%) | SO₃ (%) | NA₂O (%) | K₂O (%) |
|---|---|---|---|---|---|---|---|
| 12.8 | 2.8 | 1.8 | 43.2 | 1.0 | 0.4 | 0.3 | 0.6 |

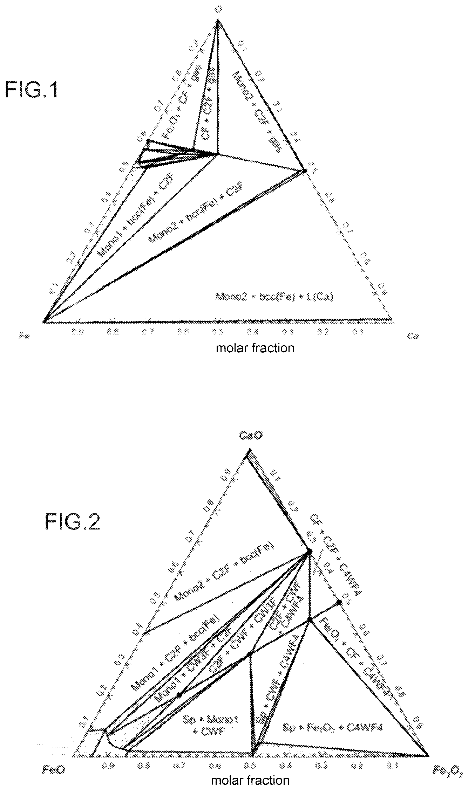

where 43.2% of the mass of typical raw material for the manufacture of cement clinker corresponds to the compound CaO (reagent of interest). Thus, the addition of 1 kilogram of this typical raw material for the manufacture of cement clinker to the system is equivalent to the addition of 432 grams of CaO. According to reaction (1), the stoichiometric ratio is 2:1, two mol of CaO are needed to react with one mol of Fe₂O₃. The molar mass of CaO is taken to be approximately 56.1 g/mol and that of Fe₂O₃ to be approximately 159.6 g/mol. In a stoichiometric ratio with the estimated yield (75%), 112.2 grams of CaO and 159.6 grams of Fe₂O₃ are required for the production of 203.8 grams of Ca₂Fe₂O₅. Taking into account the data for the typical raw material for the manufacture of cement clinker, 260 g of typical raw material for the manufacture of cement clinker must be added in the method to reduce 159.6 g of Fe₂O₃. As for the reaction temperature, data for production of Ca₂Fe₂O₅ of between 700 °C and 1300°C have been found, the maximum yield of the reaction being at a temperature of 1100°C. Due to the conversion characteristics of the activated/calcined clay, the use of temperatures of between 900°C and 1050°C is indicated;
(c) Knowing the thermodynamic data for the reactants and products involved in reactions (1) and (2), it is possible to calculate the Gibbs free energy of formation for the two products. The first reaction has a Gibbs free energy of formation equal to -59 110.45 kJ/mol, while the second reaction has a Gibbs free energy of formation of -36 433.495. As a result of the large negative values of the Gibbs free energy for both reactions it can be concluded that said reactions are spontaneous, with the formation of Ca₂Fe₂O₅ being thermodynamically more favorable (higher negative value);
(d) The reaction between CaO and Fe₂O₃ leads to the formation, predominantly, of two products: Ca₂Fe₂O₅, known as Brownmillerite, and CaFe₂O₄ (see Figure 1), both calcium ferrites. The reaction forming the two compounds can be described by the reactions:

2CaO + Fe₂O₃ -> Ca₂FeO₅ (1)

CaO + Fe₂O₃ -> CaFeO₄ (2)

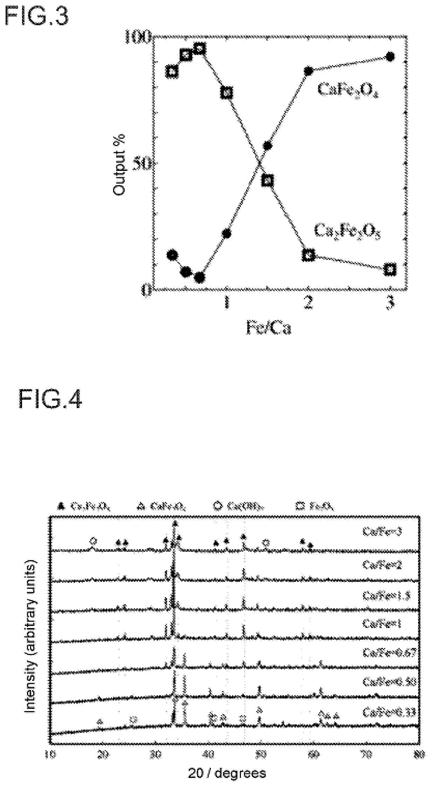

The main parameter that leads to the formation of one product over the other is the Ca/Fe ratio. Studies indicate an increase in the formation of Ca₂Fe₂O₅ for Ca/Fe>1, the yield of a stoichiometric reaction being 750 (see Figure 3). Although it is known according to Hirabayashi et al. (2006) that an increase in the Ca/Fe ratio up to 3 in the yield of the reaction, in order to ensure that the activated/calcined clay produced remains economical, we indicate only the addition of "typical raw material for the manufacture of cement clinker" up to the stoichiometric ratio of reaction (1) being maintained.

The clay composition obtained is activated/calcined clay comprising calcium aluminoferrite or calcium ferrite, preferably a calcium aluminoferrite or calcium ferrite resulting from "in-situ" formation during calcination.

The activated/calcined clay of the present invention has a greenish gray or brown color, which enables it to be used in cements, free of substantial color deviations.

There is no doubt that when the present invention is put into practice, certain details may be modified, without this implying a departure from the fundamental principles that are clearly substantiated in the claims, it being understood that the terminology employed has not been intended as a limitation.

## Claims

1. A **"METHOD OF PRODUCTION OF ACTIVATED/CALCINED CLAY WITH CALCIUM ALUMINOFERRITE OR CALCIUM FERRITE AND CLAY COMPOSITION OBTAINED BY THE METHOD"**, ***characterized* in that** calcium aluminoferrite or calcium ferrite is obtained "in-situ" to change the color of red clay during calcination in an activated/calcined clay kiln at a temperature above 900°C for approximately 45-90 minutes in counter-flow to the flue gases, said calcined red clay being suitable for addition to cement.

2. The **"METHOD"** as claimed in claim 1, ***characterized* in that** said method comprises the following steps:
- providing a first raw material, such as a typical mixture of clay and limestone for the manufacture of cement clinker, or other sources of calcium oxide or calcium carbonate;
- providing a second raw material, such as the red clay produced in an activated/calcined clay kiln in claim 1;
- the reaction between the first typical raw material CaO and Fe₂O₃ must be gauged during calcination so as to maintain the CaO supply needed for the stoichiometric ratio of the reactions
(1) 2CaO + Fe₂O₃ → Ca₂FeO₅
and
(2) CaO + Fe₂O₃ → Ca₂FeO₄

3. A "**CLAY COMPOSITION OBTAINED BY THE METHOD"** as claimed in claims 1 and 2, ***characterized* in that** the composition comprises activated/calcined clay from red clay including calcium aluminoferrite - Ca₄Al₂Fe₂O₁₀ - or calcium ferrite - Ca₂FeO₅ or Ca₂FeO₄.

4. The **"CLAY COMPOSITION OBTAINED BY THE METHOD"** as claimed in the preceding claims, ***characterized* in that** the resulting composition has a greenish gray or brown color suitable for use in cements.
